# FASCICULE DE BREVET EUROPEEN

(11) **EP 0 758 184 B1**
(45) Date de publication et mention de la délivrance du brevet: **12.07.2000**
(21) Numéro de dépôt: 96202213.3
(22) Date de dépôt: 07.08.1996
(51) Int. Cl.: H04N 5/44

(54) **Appareil d'affichage d'images avec décalage de bas d'image**
Vorrichtung zur Bildanzeige mit Verschiebung des unteren Bildbereichs
Picture display apparatus with means for shifting the bottom of the picture

(30) Priorité: 09.08.1995 FR 9509677
(43) Date de publication de la demande: 12.02.1997
(73) Titulaire: Koninklijke Philips Electronics N.V., 5621 BA Eindhoven (NL)
(72) Inventeur: Luong, Jean-Luc, Société Civile S.P.I.D., 75008 Paris (FR); Vingtrois, Régis, Société Civile S.P.I.D., 75008 Paris (FR)
(74) Mandataire: Charpail, François

(56) Documents cités:
- EP-A- 0 540 077
- WO-A-91/19378
- GB-A- 2 252 000
- US-A- 5 298 995
- PATENT ABSTRACTS OF JAPAN vol. 95, no. 004 & JP-A-07 099590 (TOSHIBA CORP), 11 Avril 1995,

## Description

La présente invention concerne un appareil d'affichage d'images, équipé d'un écran image de format 16/9, muni de circuits de balayage vertical et horizontal de type connu, le circuit de balayage vertical fournissant une dent de scie dont la pente est ajustable au moins en partie pour permettre l'affichage de sous-titres placés en dehors de l'image et étant d'un modèle tel que la position du haut d'image reste fixe lorsque la pente de la dent de scie est ajustée, l'appareil comprenant un récepteur de commande pour recevoir d'un utilisateur une commande de réglage de l'amplitude des balayages pour changer les dimensions d'une image affichée sur l'écran.

Un appareil d'affichage d'images correspondant au préambule ci-dessus est connu du document Patents Abstracts of Japan Vol 95 n°4 JP-A-07 099 590 (TOSHIBA CORP).

Un objet de l'invention est de réaliser de façon plus économique la réduction de la dimension d'image nécessaire pour permettre l'affichage de sous-titres placés en dehors de l'image.

A cet effet, la pente de la dent de scie étant ajustée en assignant une valeur de réglage de pente de type numérique à une entrée de réglage, le récepteur de commande est muni de moyens pour recevoir d'un utilisateur une commande de réglage de position de bas d'image, et ce récepteur de commande est relié à un processeur muni de moyens pour interpréter la dite commande et fournir, en réponse, une valeur de réglage de pente à l'entrée de réglage.

Ceci permet à l'usager de choisir une valeur de pente en quelque sorte "anormale", telle qu'elle ait pour effet de faire remonter le bas de l'image affichée, sans toucher à la limite haute de l'image.

Avantageusement, l'appareil étant équipé d'un boîtier de télécommande comportant des touches dites "de déplacement" dont au moins une touche pour commander un déplacement vers le bas et une touche pour commander un déplacement vers le haut, le processeur est muni de moyens pour, lorsque le récepteur de commande reçoit un signal d'appui sur l'une ou l'autre de ces touches, faire varier la dite valeur de réglage de pente dans un sens ou dans l'autre.

Ainsi, il n'est pas nécessaire de prévoir des touches spécifiques pour le réglage de pente, ce qui est avantageux car il vaut mieux éviter une surabondance de touches.

De préférence, le processeur est muni de moyens pour, à chaque pression sur une des touches de déplacement, ajouter un incrément à la valeur de réglage de pente.

Ainsi, un réglage fin est obtenu plus facilement.

L'appareil, pouvant recevoir au choix plusieurs programmes de télévision, comprend des moyens pour informer le processeur d'un changement de programme, et le processeur est muni de moyens pour, lors d'un changement de programme, ramener à la normale la valeur de réglage de pente.

Ceci est avantageux parce que, lorsqu'on change de programme, il est difficile de prévoir si le nouveau programme nécessitera le même réglage que le précédent.

L'appareil, permettant d'afficher de façon différente des images de différents formats, comprend des moyens pour informer le processeur d'un changement de format, et le processeur est muni de moyens pour faire revenir à l'état normal le réglage de pente lors d'un changement de format.

Ceci est avantageux parce que, lorsqu'on change de format, il est peu probable que le nouveau format nécessitera le même réglage que le précédent.

L'appareil comprend avantageusement des moyens pour afficher un signe sur l'écran lorsque le réglage de pente a pour effet de faire remonter le bas de l'image.

Ainsi l'utilisateur vérifie qu'il ne se trompe pas de commande et quel est l'effet obtenu.

L'appareil comprend en outre avantageusement des moyens pour stopper l'affichage du signe sur l'écran lorsque, à la suite d'une action sur une touche, le réglage de pente a repris sa valeur nominale.

Ainsi l'utilisateur est informé que le bas de l'image est revenu à sa position nominale, sans avoir à changer de programme ou de format pour retrouver cette position.

Ces aspects de l'invention ainsi que d'autres aspects plus détaillés apparaîtront plus clairement grâce à la description suivante d'un mode de réalisation constituant un exemple non limitatif.

La figure 1 représente schématiquement un récepteur de télévision.

La figure 2 est un diagramme montrant comment le courant en dents de scie est modifié par le réglage de pente.

La figure 3 illustre l'effet produit sur un écran d'appareil de télévision.

La figure 4 représente un boîtier de télécommande de téléviseur, muni de touches dites "de déplacement".

L'invention va être décrite en référence à un téléviseur, mais elle s'applique aussi à tout appareil d'affichage d'images, par exemple un moniteur.

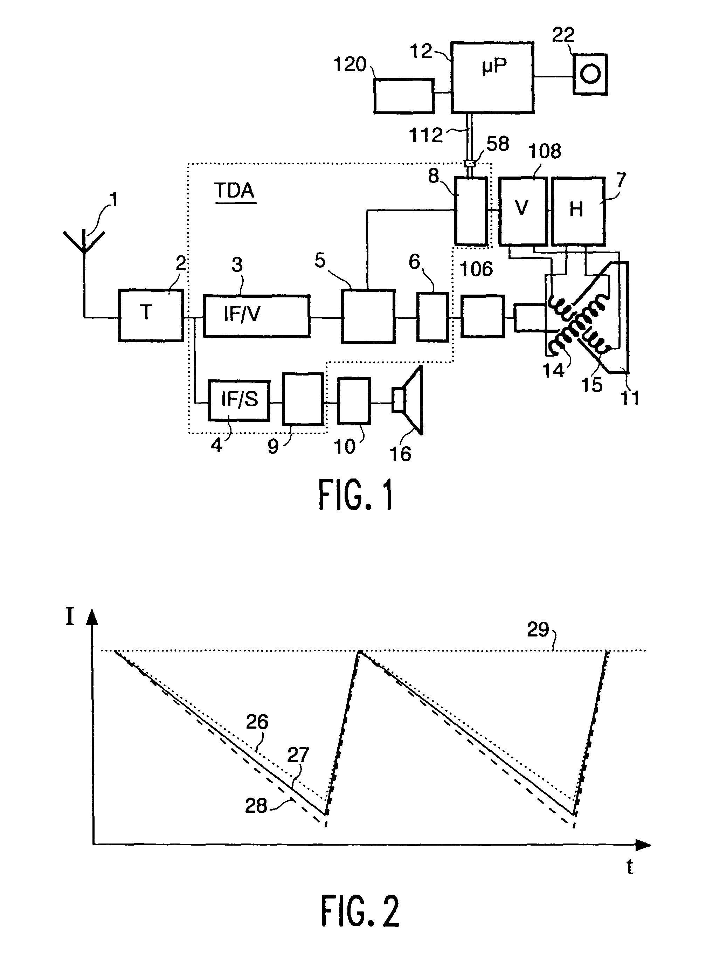

Le téléviseur dont le schéma est représenté sur la figure 1 comprend un syntoniseur 2 recevant un signal par exemple d'une antenne 1 et transposant sa fréquence vers des fréquences intermédiaires destinées à un amplificateur à fréquence intermédiaire vidéo 3 et à un amplificateur à fréquence intermédiaire son 4 qui lui font suite.

L'amplificateur à fréquence intermédiaire son 4 est suivi d'un démodulateur 9 qui délivre les signaux audio en bande de base à un amplificateur de puissance audio 10, alimentant un haut-parleur 16.

L'amplificateur à fréquence intermédiaire vidéo 3 est suivi d'un élément 5 comportant un démodulateur qui produit un signal vidéo en bande de base pour un pré-amplificateur vidéo 6, qui est suivi d'un amplificateur vidéo haute-tension 106 délivrant les signaux ad-hoc aux électrodes d'un tube image 11 à rayons cathodiques.

L'élément 5 comprend aussi un séparateur qui extrait du signal issu du démodulateur des signaux de synchronisation qui sont amenés à un étage de puissance de balayage ligne 7 et à un étage de génération de dents de scie de balayage vertical ou "trame" 8, qui alimente par liaison directe un étage de puissance trame 108. Les étages de puissance ligne et trame 7 et 108 délivrent des courants dans des bobinages déviateurs principaux 14 et 15 de ligne et de trame.

Les signaux vidéo, audio, et de synchronisation pourraient aussi bien être amenés à partir d'une source extérieure comme un décodeur satellite ou un magnétoscope.

Le téléviseur est muni d'un processeur 12, habituellement un microprocesseur, pour gérer l'ensemble de ses fonctions. De nombreux circuits d'un téléviseur moderne sont des circuits à commande numérique, c'est-à-dire dont différents réglages sont obtenus au moyen de valeurs numériques appliquées à une entrée de réglage. Ces valeurs sont gérées par le microprocesseur, auquel est associée une mémoire 120 pour mémoriser des données, dont, entre autres, les valeurs courantes des différents réglages du téléviseur. Le microprocesseur est bien entendu relié à tous les éléments pertinents de l'appareil par un bus, dont une portion 112 est reliée à une entrée 58 de programmation du circuit de génération de dents de scie de balayage trame 8.

Un récepteur de commandes 22 est prévu pour recevoir des signaux de lumière infra-rouge, de façon connue, de la part d'un boîtier de télécommande, et les communiquer au microprocesseur 12.

En ce qui concerne le circuit de génération de dents de scie de balayage trame 8, une manière de le réaliser est connue, selon laquelle la dent de scie est obtenue en chargeant une capacité au moyen d'un générateur de courant. L'homme du métier peut aisément créer un générateur de courant dont le courant soit ajustable par assignation d'une valeur de réglage à une entrée, et utiliser ce générateur pour charger la dite capacité. Ainsi peut être créé un circuit de balayage trame fournissant une dent de scie dont la pente est ajustable en assignant une valeur de réglage de pente à une entrée de réglage. Néanmoins il existe des circuits tout faits dans le commerce, notamment des circuits intégrés qui remplissent à eux seuls le rôle d'une pluralité de constituants d'un téléviseur, tel le circuit TDA 8366 commercialisé par la société Philips. Ce circuit TDA 8366 rassemble en un seul boîtier les éléments qui sont entourés d'une ligne en pointillé sur la figure 1, avec entre autres le circuit 8 de génération de dents de scie de balayage trame, et il offre la possibilité d'ajuster une vingtaine de paramètres, concernant notamment les balayages horizontal et vertical, les caractéristiques du signal vidéo, etc. Pour cela il possède une entrée pour un bus normalisé (norme I2C) au moyen duquel les données de réglages sont introduites par le microprocesseur : après l'adressage du circuit TDA 8366, une sous-adresse est spécifiée pour désigner quel est le paramètre particulier à ajuster, puis la valeur de ce paramètre est spécifiée, laquelle est alors mémorisée dans le circuit TDA 8366 lui même. Entre autres, la pente de la dent de scie de balayage vertical est ajustable en assignant dans un registre, correspondant à la sous-adresse &H08, une valeur comprise entre 0 et 63.

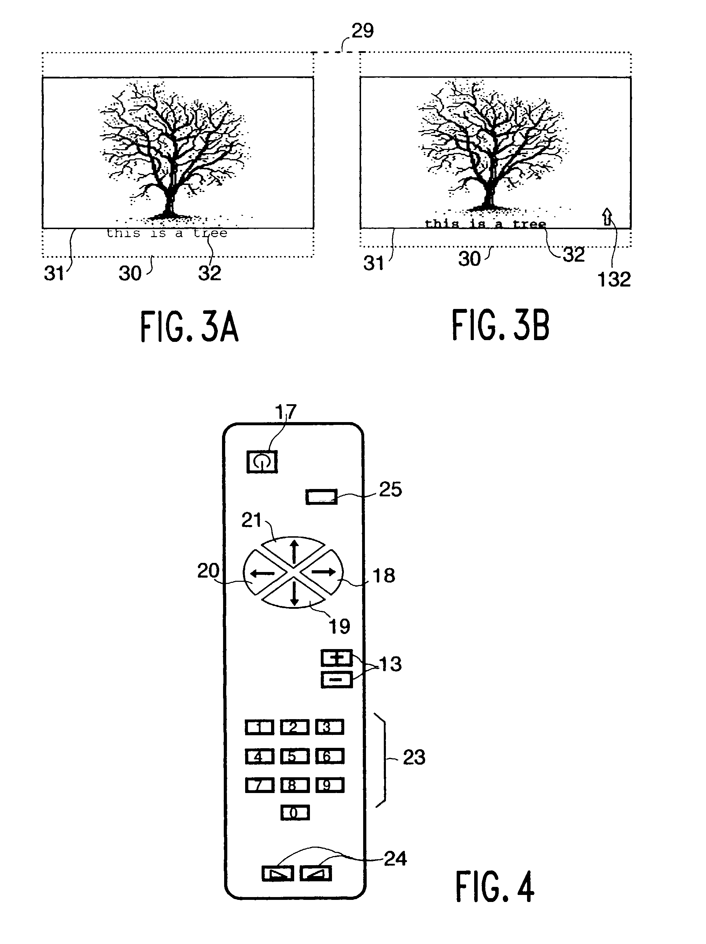

Des courants de balayage vertical sont représentés sur la figure 2 de telle manière que les points les plus hauts sur la figure correspondent à la position la plus haute du spot sur l'écran. Il peut se faire que cette position soit située en dehors de l'écran, dans le cas où l'amplitude du courant de balayage donne au mouvement du spot une amplitude plus grande que la hauteur de l'écran, comme on le verra à propos de la figure 3. Trois lignes en dent de scie 26, 27, 28 représentent des exemples de réglages du courant, obtenus pour chacun en communiquant une valeur numérique à l'entrée de programmation. A chaque fois le haut de l'image 29 reste à la même position, mais la position du bas de l'image évolue.

Sur la figure 3 A, l'image d'un arbre est affichée sur un écran image 31 de format 16/9. En fait, cette image provient ici d'une télé-diffusion en format 4/3, dont le contour extérieur d'image est indiqué par un trait en pointillé 30. En format 4/3, un film en format "cinémascope" est souvent diffusé de façon telle que, dans le cas d'un écran 4/3, des bandes noires sont présentes au dessus et en dessous de l'image utile, cette sorte d'image étant appelée "letterbox". Dans le cas d'un écran 16/9, il est alors intéressant de pouvoir modifier l'amplitude de l'un des balayages, de façon à changer les dimensions d'une image affichée sur l'écran 16/9. Une manière d'offrir une telle possibilité est décrite en détail dans le document cité EP-A-0 540 077. En outre il est clair que cette possibilité peut, en ce qui concerne l'amplitude verticale, être basée sur une programmation du circuit TDA 8366, lequel permet de régler l'amplitude verticale. Faisant usage de cette possibilité, l'image "letterbox" de format 4/3 a été agrandie ici de façon à présenter un contour extérieur virtuel 30 ; bien entendu les parties extérieures à l'écran 31 ne sont pas visibles, mais cela n'est pas gênant quand il s'agit de bandes noires. Toutefois il peut arriver, comme ici, qu'un sous-titre 32 soit placé dans la bande noire du bas.

Sur la figure 3 B, la même image est présentée avec une réduction de la pente de la dent de scie de balayage trame. Le haut de l'image est toujours à la même place, indiquée par une ligne 29, à l'extérieur de l'écran, mais le bas 30 de l'image est plus haut, ce qui rend visible le sous-titre 32. Le microprocesseur comprend ou dispose de moyens associés, connus en soi, pour afficher un signe sur l'écran, par exemple une flèche 132. Ces moyens sont actionnés lorsqu'on utilise une touche de déplacement ayant pour effet de faire remonter le bas de l'image. L'affichage de la flèche 132 est temporaire, et il est stoppé lorsque, à la suite d'une action sur une touche, le réglage de pente reprend sa valeur nominale.

Une procédure générale connue de commande d'un téléviseur consiste en l'utilisation de menus affichés à l'écran. Le boîtier de télécommande de la figure 4 comporte de façon connue une touche de mise en veille 17, une touche 25 d'appel de menu, une paire de touches 24 de réglage de la puissance du son, un pavé numérique 23 permettant notamment le choix d'un programme, des touches 13 permettant d'augmenter ou de diminuer la valeur d'un paramètre, un pavé de quatre touches 18-21 permettant entre autres de naviguer dans un menu. Pour arriver au réglage d'un paramètre, il faut en général d'abord passer par un ou plusieurs menus. C'est pourquoi, afin de simplifier la procédure de réglage de la position du bas d'image, on a imaginé de donner au pavé de quatre touches 18-21 de la télécommande, en plus de sa fonction de navigation dans les menus, une fonction de saisie simplifiée. Cette fonction est active lorsqu'aucun menu n'est présent à l'écran, c'est-à-dire qu'aucun programme de menu n'est en cours d'exécution. Alors, lors d'une pression sur la touche 19 ou la touche 21, le microprocesseur, à partir d'une valeur auparavant fixée dans le registre de sous-adresse &H08, applique à cette valeur un incrément qui accroit la pente (touche 19) ou la diminue (touche 21). Ensuite, tout appui sur la touche continuera d'incrémenter la valeur dans ce registre pour ajuster au mieux la position du sous-titrage. En aucun cas la valeur de ce registre ne peut être supérieure à la valeur nominale réglée lors de la fabrication du téléviseur (c'est-à-dire que l'utilisateur ne peut pas abaisser le bas d'image par rapport à la position illustrée par la figure 3A). La présence de la valeur nominale dans le registre entraîne l'effacement de la flèche 132.

## Revendications

1. Appareil d'affichage d'images, équipé d'un écran image de format 16/9, muni de circuits de balayage vertical et horizontal de type connu, le circuit de balayage vertical fournissant une dent de scie dont la pente est ajustable au moins en partie pour permettre l'affichage de sous-titres placés en dehors de l'image et étant d'un modèle tel que la position du haut d'image reste fixe lorsque la pente de la dent de scie est ajustée, l'appareil comprenant un récepteur de commande pour recevoir d'un utilisateur une commande de réglage de l'amplitude des balayages pour changer les dimensions d'une image affichée sur l'écran, **caractérisé en ce que**, la pente de la dent de scie étant ajustée en assignant une valeur de réglage de pente de type numérique à une entrée de réglage, le récepteur de commande est muni de moyens pour recevoir d'un utilisateur une commande de réglage de position de bas d'image, et ce récepteur de commande est relié à un processeur muni de moyens pour interpréter la dite commande et fournir, en réponse, une valeur de réglage de pente à l'entrée de réglage.

2. Appareil d'affichage d'images selon la revendication 1, équipé d'un boîtier de télécommande comportant des touches dites "de déplacement" dont au moins une touche pour commander un déplacement vers le bas et une touche pour commander un déplacement vers le haut, **caractérisé en ce que** le processeur est muni de moyens pour, lorsque le récepteur de commande reçoit un signal d'appui sur l'une ou l'autre de ces touches, faire varier la dite valeur de réglage de pente dans un sens ou dans l'autre.

3. Appareil d'affichage d'images selon la revendication 2, **caractérisé en ce que** le processeur est muni de moyens pour, à chaque pression sur une des touches de déplacement, ajouter un incrément à la valeur de réglage de pente.

4. Appareil d'affichage d'images selon la revendication 1, pouvant recevoir au choix plusieurs programmes de télévision, **caractérisé en ce qu**'il comprend des moyens pour informer le processeur d'un changement de programme, et le processeur est muni de moyens pour, lors d'un changement de programme, ramener à la normale la valeur de réglage de pente.

5. Appareil d'affichage d'images selon la revendication 1, permettant d'afficher de façon différente des images de différents formats, **caractérisé en ce qu**'il comprend des moyens pour informer le processeur d'un changement de format, et le processeur est muni de moyens pour faire revenir à l'état normal le réglage de pente lors d'un changement de format.

6. Appareil d'affichage d'images selon la revendication 1, **caractérisé en ce qu**'il comprend des moyens pour afficher un signe sur l'écran lorsqu'on actionne une touche de déplacement qui a pour effet de faire remonter le bas de l'image.

7. Appareil d'affichage d'images selon la revendication 6, **caractérisé en ce que** les moyens pour afficher le signe sur l'écran, lorsqu'on actionne une touche de déplacement, produisent un affichage temporaire.

8. Appareil d'affichage d'images selon la revendication 7, **caractérisé en ce qu**'il comprend des moyens pour stopper l'affichage du signe sur l'écran lorsque, à la suite d'une action sur une touche, le réglage de pente a repris sa valeur nominale.

## Patentansprüche

1. Vorrichtung zur Bildanzeige, ausgerüstet mit einem Bildschirm vom Format 16/9, versehen mit vertikalen und horizontalen Abtastschaltungen bekannten Typs, wobei die vertikale Abtastschaltung einen Sägezahn liefert, dessen Neigung zumindest teilweise angepaßt werden kann, um die Anzeige von Untertiteln extern zum Bild zu ermöglichen, die einer Bauart ist, damit die obere Bildposition stabil bleibt, wenn der Sägezahn angepaßt wird, wobei die Vorrichtung einen Bedienungsempfänger enthält, um von einem Anwender eine Einstellungsbedienung der Abtastamplitude zu erhalten, um die Größe eines auf dem Bildschirm angezeigten Bildes zu verändern, dadurch gekennzeichnet, daß die Neigung des Sägezahns angepaßt wird, indem einem Einstellungseingang ein Neigungs-Einstellungswert numerischen Typs zugeteilt wird, wobei der Bedienungsempfänger Mittel aufweist, um von einem Anwender eine Einstellungsbedienung der unteren Bildposition zu erhalten, und dieser Bedienungsempfänger mit einem Prozessor verbunden ist, der Mittel zum Auslegen der besagten Bedienung aufweist und in Antwort darauf einen Neigungs-Einstellungswert an den Einstellungseingang zu liefern.

2. Vorrichtung zur Bildanzeige nach Anspruch 1, mit einer Fernbedienung mit sogenannten "Versetzungstasten" ausgerüstet, worunter mindestens eine Taste zur Bedienung einer Versetzung nach unten, und eine Taste zur Bedienung einer Versetzung nach oben, dadurch gekennzeichnet, daß der Prozessor mit Mitteln versehen ist, um, wenn der Bedienungsempfänger ein Kontaktsignal der einen oder anderen Taste erhält, den besagten Neigungs-Einstellungswert in die eine oder andere Richtung zu verändern.

3. Vorrichtung zur Bildanzeige nach Anspruch 2, dadurch gekennzeichnet, daß der Prozessor mit Mitteln versehen ist, um bei jedem Druck auf eine der Versetzungstasten den Wert der Neigungseinstellung zu erhöhen.

4. Vorrichtung zur Bildanzeige nach Anspruch 1, das wahlweise mehrere Fernsehprogramme empfangen kann, dadurch gekennzeichnet, daß es Mittel enthält, um dem Prozessor einen Programmwechsel zu signalisieren, und der Prozessor mit Mitteln versehen ist, um bei einem Programmwechsel wieder auf den normalen Neigungs-Einstellungswert zurückzugehen.

5. Vorrichtung zur Bildanzeige nach Anspruch 1, die es ermöglicht, Bilder verschiedener Formate verschiedenartig anzuzeigen, dadurch gekennzeichnet, daß sie Mittel enthält, um dem Prozessor einen Programmwechsel zu signalisieren, und der Prozessor mit Mitteln versehen ist, um die Neigungseinstellung bei einem Formatwechsel auf den Normalwert zurückzubringen.

6. Vorrichtung zur Bildanzeige nach Anspruch 1, dadurch gekennzeichnet, daß sie Mittel enthält, um ein Zeichen auf dem Bildschirm anzuzeigen, wenn man eine Versetzungstaste betätigt, die bewirkt daß der untere Bildbereich versetzt wird.

7. Vorrichtung zur Bildanzeige nach Anspruch 6, dadurch gekennzeichnet, daß die Mittel zum Anzeigen eines Zeichens auf dem Bildschirm, wenn man eine Versetzungstaste betätigt, zeitlich begrenzt sind.

8. Vorrichtung zur Bildanzeige nach Anspruch 7, dadurch gekennzeichnet, daß sie Mittel enthält, um die Anzeige des Zeichens auf dem Bildschirm abzubrechen, wenn infolge einer Tastenbetätigung die Neigungseinstellung auf ihren nominalen Wert zurückkommt.

## Claims

1. A picture display apparatus having a 16/9 format display screen, comprising vertical and horizontal scanning circuits of known type, the vertical scanning circuit supplying a sawtooth whose slope is at least partly adjustable to allow display of sub-titles placed outside the picture and being of such a model that the position of the upper part of the picture remains fixed when the sawtooth slope is adjusted, the apparatus comprising a control receiver for receiving, from a user, a command for adjusting the amplitude of the scannings for changing the dimensions of a picture displayed on the screen, characterized in that, the slope of the sawtooth being adjusted by assigning a slope control value of the digital type to a control input, the control receiver comprises means for receiving, from a user, a command for controlling the position of the lower part of the picture, which control receiver is connected to a processor provided with means for interpreting said command and for applying, in response, a slope control value to the control input.

2. A picture display apparatus as claimed in claim 1, provided with a remote control unit comprising shift keys, at least one key of which is used for a shift downwards and one key for a shift upwards, characterized in that the processor is provided with means for varying said slope control value in one sense or another when the control receiver receives a signal from either the one or the other key.

3. A picture display apparatus as claimed in claim 2, characterized in that the processor is provided with means for adding one increment to the slope control value whenever one of the shift keys is activated.

4. A picture display apparatus as claimed in claim 1, suitable for receiving a selection of various television programs, characterized in that it comprises means for informing the processor of a program change, and the processor is provided with means for causing the slope control value to resume its normal value when a program change

5. A picture display apparatus as claimed in claim 1, with which pictures of different formats can be displayed in different ways, characterized in that it comprises means for informing the processor of a format change, and the processor is provided with means for causing the slope control to resume the normal state when a format change has occurred.

6. A picture display apparatus as claimed in claim 1, characterized in that it comprises means for displaying a sign on the screen when a shift key is activated for raising the lower part of the picture.

7. A picture display apparatus as claimed in claim 6, characterized in that the means for displaying the sign on the screen display the sign temporarily when a shift key is activated.

8. A picture display apparatus as claimed in claim 7, characterized in that it comprises means for discontinuing the display of the sign on the screen when, in response to a subsequent activation of a key, the slope control has resumed its nominal value.
